# EUROPEAN PATENT APPLICATION

(11) **EP 4 184 412 A1**
(43) Date of publication of application: **24.05.2023**
(21) Application number: 22189444.7
(22) Date of filing: 09.08.2022
(51) Int. Cl.: G06Q 30/0241, G06F 3/0484

(54) **METHOD AND APPARATUS FOR PRESENTING RESOURCES**

(30) Priority: 18.11.2021 CN 202111371176
(71) Applicant: Beijing Dajia Internet Information Technology Co., Ltd., Beijing 100085 (CN)
(72) Inventor: ZHANG, Zhiyu, Beijing, 100085 (CN); ZHANG, Yimeng, Beijing, 100085 (CN); WANG, Nuan, Beijing, 100085 (CN); LIU, Chenyu, Beijing, 100085 (CN); OUYANG, Chuyi, Beijing, 100085 (CN); CHEN, Yue, Beijing, 100085 (CN); JIN, Long, Beijing, 100085 (CN); XIAO, Ying, Beijing, 100085 (CN); ZHU, Xiaolin, Beijing, 100085 (CN); ZHU, Jingji, Beijing, 100085 (CN)
(74) Representative: Yang, Shu

(57) **Abstract**

Provided are a method and apparatus for presenting resources, which relate to the field of Internet technologies. The method includes: playing (201, 301, 801), in response to a launch operation on an application, a first media resource of a target activity in an initialization page of the application, wherein an activity interaction control is presented in a resource screen of the first media resource; displaying (202), in response to an interaction operation on the activity interaction control, the activity interaction control performing an action corresponding to the interaction operation; and presenting (203, 304, 803) a second media resource of the target activity.

## Description

### TECHNICAL FIELD

The present disclosure relates to the field of Internet technologies, and in particular, relates to a method and apparatus for presenting resources.

### BACKGROUND

With rapid developments of computer and mobile Internet technologies, various applications, such as live streaming applications, social media applications, and shopping applications, have been developed. In some applications, when a user launches the application, a terminal is triggered to present predetermined opening-screen resources or advertisements in the initialization page of the application.

### SUMMARY

Embodiments of the present disclosure provide a method and apparatus for presenting resources.

According to one aspect of the embodiments of the present disclosure, a method for presenting resources is provided. The method includes: playing, in response to a launch operation on an application, a first media resource of a target activity in an initialization page of the application, wherein an activity interaction control is presented in a resource screen of the first media resource, and the first media resource is configured to introduce the target activity; displaying, in response to an interaction operation on the activity interaction control by a user, the activity interaction control performing an action corresponding to the interaction operation; and presenting a second media resource of the target activity, wherein the second media resource is associated with the first media resource.

According to another aspect of the embodiments of the present disclosure, aan apparatus for presenting resources is provided. The apparatus includes: a playing unit, configured to play, in response to a launch operation on an application, a first media resource of a target activity in an initialization page of the application, wherein an activity interaction control is presented in a resource screen of the first media resource, and the first media resource is configured to introduce the target activity; an interacting unit, configured to display, in response to an interaction operation on the activity interaction control by a user, the activity interaction control performing an action corresponding to the interaction operation; and a presenting unit, configured to present a second media resource of the target activity, wherein the second media resource is associated with the first media resource.

According to another aspect of the embodiments of the present disclosure, a non-transitory computer-readable storage medium is provided. The non-transitory computer-readable storage medium stores one or more program codes, wherein the one or more program codes, when loaded and executed by a processor of a computer device, cause the computer device to perform the method for presenting resources according to above aspect.

### BRIEF DESCRIPTION OF THE DRAWINGS

FIG. 1 is a schematic diagram of an environment of performing a method for presenting resources according to an embodiment of the present disclosure;
FIG. 2 is a flowchart of a method for presenting resources according to an embodiment of the present disclosure;
FIG. 3 is a flowchart of a method for presenting resources according to an embodiment of the present disclosure;
FIG. 4 is a schematic diagram of an initialization page according to an embodiment of the present disclosure;
FIG. 5 is a schematic diagram of an initialization page according to an embodiment of the present disclosure;
FIG. 6 is a schematic diagram of an initialization page according to an embodiment of the present disclosure;
FIG. 7 is a schematic diagram of a content page according to an embodiment of the present disclosure;
FIG. 8 is a flowchart of a method for presenting resources according to an embodiment of the present disclosure;
FIG. 9 is a block diagram of an apparatus for presenting resources according to an embodiment of the present disclosure; and
FIG. 10 is a structural block diagram of a terminal according to an embodiment of the present disclosure.

### DETAILED DESCRIPTION

It should be noted that the terms "first," "second," and the like in the description, claims, and above accompanying drawings of the present disclosure are used to distinguish similar objects, but not necessarily used to describe a specific order or precedence order. It should be understood that data used in this way may be interchanged where appropriate, such that the embodiments of the present disclosure described herein can be implemented in the sequence other than those illustrated or described herein.

The data involved in the present disclosure is information authorized by the user or fully authorized by all parties.

With the rapid development of communication technologies, various applications, such as a live streaming application, a social media application, and a shopping application, have been developed and used. In some scenarios, when a user launches the application, a terminal is triggered to present predetermined opening-screen resources or advertisements in an initialization page of the application. However, the predetermined opening-screen resources or advertisements in the application are typically presented in a single form, and thus the presentation effect of the resources is poor.

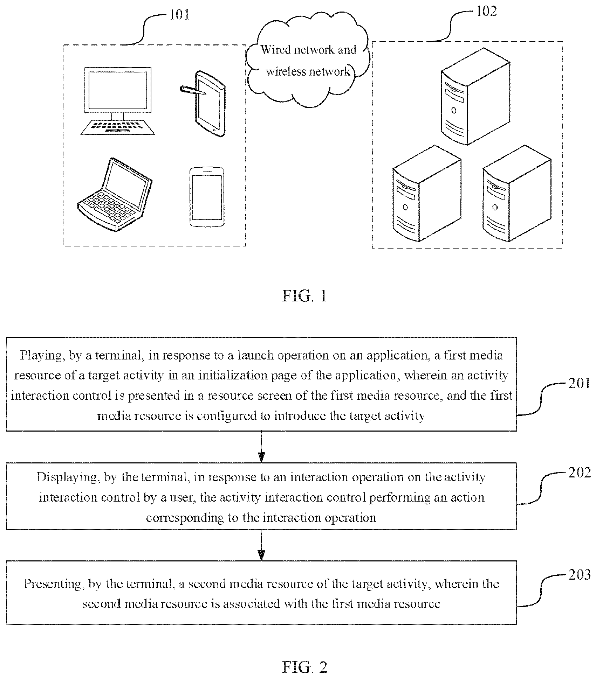

FIG. 1 is a schematic diagram of an environment of performing a method for presenting resources according to an embodiment of the present disclosure. Referring to FIG. 1, the performing environment includes a terminal 101. The terminal 101 may be a smart phone, a smart watch, a desktop computer, a virtual reality terminal, an augmented reality terminal, a wireless terminal, or a laptop computer. The terminal 101 has a communication function and can access to a wired network or a wireless network. The terminal 101 may generally refer to one of a plurality of terminals. The embodiments may be illustrated by taking the terminal 101 as an example. Persons skilled in the art may know that the number of terminals mentioned above may be more or less.

In some embodiments, various applications, such as video applications, live streaming applications, shopping applications, and social media applications, are installed on the terminal 101. In the case that the user launches an application, the terminal 101 is triggered to present predetermined opening-screen resources or advertisements in the initialization page of the application. The application refers to the application program in the embodiments of the present disclosure.

In the embodiments of the present disclosure, the terminal 101 is configured to: play, in response to a launch operation on an application, a first media resource of a target activity in an initialization page of the application; display, in response to an interaction operation by the user on the activity interaction control presented in a resource screen of the first media resource, the activity interaction control performing an action corresponding to the interaction operation; and present a second media resource of the target activity.

In some embodiments, the terminal 101 is directly or indirectly connected to the server 102 through wired or wireless communication, which is not limited in the embodiments of the present disclosure.

The server 102 is an independent physical server, a server cluster composed of a plurality of physical servers, a distributed file system, or a could server that provides cloud services, cloud databases, cloud computing, cloud functions, cloud storage, network services, cloud communications, middleware services, domain name services, security services, content delivery network (CDN), and basic cloud computing services such as big data and artificial intelligence platforms.

In some embodiments, the server 102 is a backend server of the above applications. The server 102 is configured to provide, in response to a request from the terminal 101, a service accessed by the request to the terminal 101.

In some embodiments, one or more servers 102 may be configured, and the number of servers 102 is not limited in the embodiments of the present disclosure. In some embodiments, the server 102 may further include other functional servers to provide a full range of and a diversity of services.

FIG. 2 is a flowchart of a method for presenting resources according to an embodiment of the present disclosure. As shown in FIG. 2, the method, applicable to a computer device, is illustrated by taking the computer device being a terminal as an example.

In S201, the terminal plays, in response to a launch operation on an application, a first media resource of a target activity in an initialization page of the application, wherein an activity interaction control is presented in a resource screen of the first media resource, and the first media resource is configured to introduce the target activity. In some embodiments, the first media resource includes, but is not limited to: a video resource, an audio resource, a picture resource, a text resource, and a webpage resource. The action of playing the first media resource includes playing a video resource and an audio resource as well as displaying a picture resource, a text resource and webpage, and any other media resources appropriate for being presented in the initialization page of an application.

In S202, the terminal displays, in response to an interaction operation by a user based on the activity interaction control, the activity interaction control performing an action corresponding to the interaction operation. That is, the terminal displays, in response to the interaction operation on the activity interaction control by the user, the activity interaction control performing the action corresponding to the interaction operation.

In S203, the terminal presents a second media resource of the target activity, wherein the second media resource is associated with the first media resource.

In the technical solutions of the embodiments of the present disclosure, the first media resource of the target activity is presented in the initialization page of the application, and the activity interaction control is further presented in the resource screen of the first media resource when the first media resource is presented, so as to increase an amount of information/action presented in the initialization page. Furthermore, the presentation of the activity interaction control performing the action corresponding to the interaction operation is triggered by the interaction operation on the activity interaction control by the user, and the second media resource of the target activity is further presented. Thus, interaction of the media resources in the initialization page with the user is achieved, such that the form of interaction in the initialization page is diversified, and the presentation effect of the media resources and the efficiency of human-machine interaction are improved.

In some embodiments, playing the first media resource of the target activity in the initialization page of the application includes: presenting the activity interaction control in an upper layer of the resource screen of the first media resource played in the initialization page; displaying, in response to the interaction operation on the activity interaction control, the activity interaction control performing the action corresponding to the interaction operation includes: displaying, in response to the interaction operation on the activity interaction control presented in the upper layer of the resource screen of the first media resource, the activity interaction control performing the action corresponding to the interaction operation by the user. The upper layer of the resource screen refers to an image layer or a virtual image layer above the resource screen and at least partially covering the resource screen.

In some embodiments, presenting the activity interaction control in the upper layer of the resource screen of the first media resource played in the initialization page includes at least one of: presenting, in response to start of play of the first media resource, the activity interaction control in the upper layer of the resource screen of the first media resource; or presenting, in response to a play duration of the first media resource reaching a first duration, the activity interaction control in the upper layer of the resource screen of the first media resource.

In some embodiments, the resource screen of the first media resource includes the activity interaction control; and displaying, in response to the interaction operation on the activity interaction control, the activity interaction control performing the action corresponding to the interaction operation includes: displaying, in response to the interaction operation on the resource screen of the first media resource, the activity interaction control performing the action corresponding to the interaction operation. That is, the action performed by the activity interaction control is presented on the resource screen which is a part of the resource screen, instead of being presented in an upper layer or an image layer above the resource screen.

In some embodiments, the method further includes at least one of: presenting an interaction trigger animation of the activity interaction control, wherein the interaction trigger animation indicates that presentation of the second media resource of the target activity is triggerable in response to the interaction operation on the activity interaction control; or, presenting an interaction trigger prompt of the activity interaction control, wherein the interaction trigger prompt indicates that the presentation of the second media resource of the target activity is triggerable based on the interaction operation on the activity interaction control.

In some embodiments, the interaction control is provided as a form of the interaction trigger animation and the interaction trigger animation illustrates/demonstrates an action corresponding to the interaction operation. The method further includes: performing, in response to the interaction operation on the interaction trigger animation by a user, the action the activity interaction control performing the action corresponding to the interaction operation.

In some embodiments, the interaction operation is a rotation operation; and displaying, in response to the interaction operation on the activity interaction control, the activity interaction control performing the action corresponding to the interaction operation includes: displaying, in response to the rotation operation on the activity interaction control, that the activity interaction control rotates with the rotation operation.

In some embodiments, the method further includes: presenting the rotation of the activity interaction control in a target direction; and stopping, in response to a rotating duration of the activity interaction control reaching a second duration, the rotation of the activity interaction control.

In some embodiments, the second media resource is configured to introduce at least one virtual resource associated with the target activity; and presenting the second media resource of the target activity includes at least one of: presenting the at least one virtual resource in an upper layer of the resource screen of the second media resource; or presenting the at least one virtual resource in the resource screen of the second media resource.

In some embodiments, the method further includes: jumping, in response to a trigger operation on any virtual resource, to a content page of the target activity.

In some embodiments, a presentation style of the activity interaction control is associated with content of the target activity.

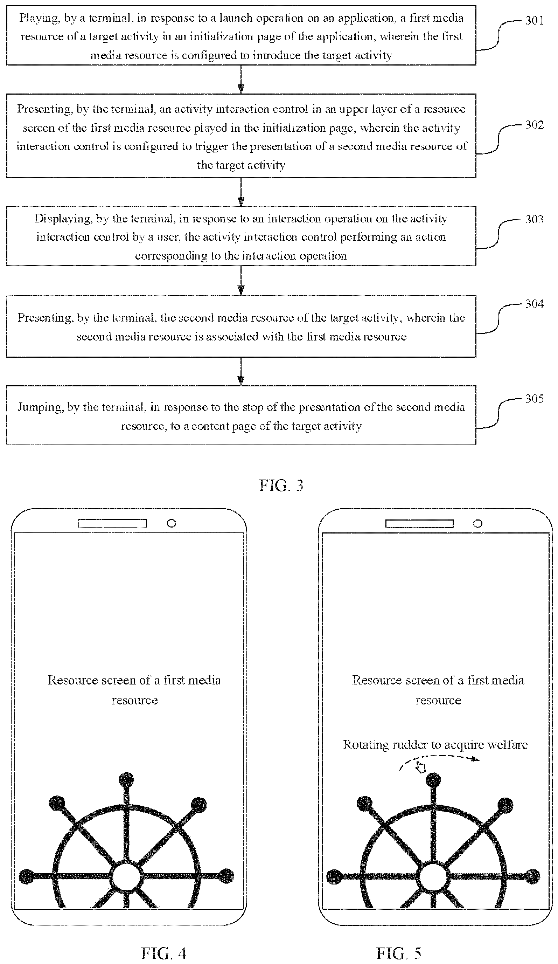

FIG. 2 merely shows basic processes of the present disclosure, and the technical solutions of the present disclosure are further illustrated hereinafter in accordance with a specific embodiment. FIG. 3 is a flowchart of a method for presenting resources according to an embodiment of the present disclosure. As shown in FIG. 3, the method, applicable to a computer device, is illustrated by taking the computer device being a terminal as an example.

In S301, the terminal plays, in response to a launch operation on an application, a first media resource of a target activity in an initialization page of the application, wherein the first media resource is configured to introduce the target activity.

In the embodiments of the present disclosure, various applications, such as video applications, live streaming applications, shopping applications, and social media applications, are installed on the terminal. The initialization page is a page presented first when the application is launched, which is also referred to as an opening-screen page, a launch page, and an application start page, or the like in the present disclosure.

The target activity may be an activity of any type, such as, an advertisement activity. For example, the target activity is an activity configured to advertise a product or a service. In the case that the target activity is an advertisement activity, the media resource of the target activity is an advertisement resource. For example, the media resource is at least one of a video resource, an audio resource, a picture resource, a text resource, and a webpage resource that are configured to advertise a product or a service. The types of the target activity and the media resource are not limited in the embodiments of the present disclosure. In some embodiments, different target activities are distinguished based on the activity identifications. For example, the activity identification is an activity name, an activity number, an activity identification (ID), or the like.

In some embodiments, the user performs the launch operation on the application in the terminal by operating on the terminal, and the terminal plays, in response to the launch operation on the application, the first media resource of the target activity in the initialization page of the application.

Illustratively, FIG. 4 is a schematic diagram of an initialization page according to an embodiment of the present disclosure. Referring to FIG. 4, the initialization page is the "opening-screen page" shown, and the resource screen of the first media resource is presented in the "opening-screen page."

In S302, the terminal presents an activity interaction control in an upper layer of the resource screen of the first media resource in the initialization page, wherein the activity interaction control is configured to trigger the presentation of a second media resource of the target activity.

In some embodiments, the activity interaction control is presented in the upper layer of the resource screen of the first media resource and is configured to be triggered by a user such that the terminal displays that the activity interaction control is performing an action corresponding the interaction operation by the user. That is, the presentation of the activity interaction control performing the action corresponding to the interaction operation is triggered by the interaction operation of the user on the activity interaction control. In this way, the form of interaction in the initialization page is diversified, and the efficiency of human-machine interaction is improved.

In some embodiments, the presentation style of the activity interaction control is associated with content of the target activity. In an embodiment, the presentation style of the activity interaction control is associated with the content of a subject matter of the target activity. Alternatively, in some embodiments, the presentation style of the activity interaction control is associated with the content of a scenario of the target activity. Alternatively, in some embodiments, the presentation style of the activity interaction control is associated with the content of a style of the target activity, and the like. For example, in a scenario where the target activity is related with a ship, the presentation style of the activity interaction control is a rudder. In a scenario where the target activity is related with a virtual red envelope, the presentation style of the activity interaction control is the virtual red envelope. The presentation style of the activity interaction control is not limited in the embodiments of the present disclosure.

In some embodiments, the terminal further determines, based on the target activity, style indication information of the activity interaction control. For example, the terminal determines, in response to the launch operation on the application, the style indication information of the activity interaction control based on the target activity. The style indication information is configured to introduce the presentation style of the activity interaction control, such that the activity interaction control is presented based on the introduced presentation style.

In some embodiments, the terminal determines, based on the activity identification of the target activity, the style indication information associated with the activity identification. In some embodiments, the terminal queries in a library of activity information based on the activity identification of the target activity to determine the style indication information associated with the activity identification. The library of activity information is configured to store the activity identifications of a plurality of activities and the style indication information of the activities. That is, in the library of activity information, the activity identifications of the activities are stored in association with the style indication information of the activities. For example, by taking the activity identification as Key and the style indication information as Value, Key-Value configuration data is constructed for associated storage.

In the above description, the process of determining the indication information is described by taking the terminal as an operation body. In some embodiments, the process may be performed by the terminal and the server. Taking the process of querying the library of activity information as an example, determining the style indication information includes that, the terminal sends, in response to the launch operation on the application, a style acquiring request including the activity identification of the target activity to the server; the server receives the style acquiring request, determines the style indication information stored in association with the activity identification by querying, based on the activity identification in the style acquiring request, in the library of activity information, and sends the determined style indication information to the terminal; and the terminal presents, based on the presentation style introduced by the style indication information, the activity interaction control upon receiving the style indication information.

Because the presentation style of the activity interaction control is associated with the content of the target activity, the presented activity interaction control is personalized and more attractive. For example, for different types of activities, the activity interaction controls of different presentation styles may be set based on the content of the activities, and thus the form of interaction based on the activity interaction controls is diversified.

In some embodiments, the terminal triggers the presentation of the activity interaction control at different opportunities. Some possible embodiments of presenting the opportunity of the activity interaction control are described hereinafter.

In some embodiments, the terminal presents, in response to start of play of the first media resource, the activity interaction control in the upper layer of the resource screen of the first media resource. By presenting the activity interaction control in response to start of play of the first media resource, the user can quickly perform a trigger operation on the activity interaction control.

In some embodiments, the terminal presents, in response to a play duration of the first media resource reaching a first duration, the activity interaction control in the upper layer of the resource screen of the first media resource. The first duration is a predetermined fixed duration, such as 10s, and the first duration may be any value greater than 0. For example, the terminal presents, in response to the play duration of the first media resource reaching 10s, the activity interaction control in the upper layer of the resource screen of the first media resource. Because the activity interaction control is presented after the first media resource is displayed for a specific period, the user may focus on the resource content of the first media resource within this period, so as to prevent the activity interaction control from blocking the resource screen of the first media resource, and improve the viewing experience of the user.

Illustratively, referring to FIG. 4, taking the target activity being associated with the ship as an example, the activity interaction control in the "rudder" style is presented in the "resource screen of the first media resource".

By presenting the opportunity of triggering the activity interaction control in the above possible embodiments, the activity interaction control is presented, and thus, the flexibility of presenting the activity interaction control is improved.

In S303, the terminal displays, in response to the interaction operation on the activity interaction control by the user, the activity interaction control performing the action corresponding to the interaction operation.

The action that matches with the interaction operation is the action that corresponds to the interaction operation. That is, the terminal displays the following: the activity interaction control is performing an action corresponding to the interaction operation. For example, in the case that the interaction operation is a rotation operation, the action that matches with the interaction operation is a rotation in response to the rotation operation by the user. The terminal displays the activity interaction control rotating in response to the rotation operation on the activity interaction control by the user. In another example, the interaction operation is a slide operation, and the action that matches with or corresponds to the interaction operation is a slide movement with a displacement. In another example, the interaction operation is a tap operation, and the action that matches with or corresponds to the interaction operation is tapping with sound corresponding to the tap operation. It should be appreciated that the interaction operation may be any appropriate action associated with the activity interaction control, which is not limited in the present disclosure.

In some embodiments, the interaction operation is the rotation operation, and the terminal presents, in response to the rotation operation on the activity interaction control, that the activity interaction control rotates with the rotation operation.

In some embodiments, taking the rotation operation being a clockwise rotation operation as an example, the terminal presents, in response to the clockwise rotation operation on the activity interaction control, that the activity interaction control rotates clockwise. In some embodiments, taking the rotation operation being a counterclockwise rotation operation as an example, the terminal presents, in response to the counterclockwise rotation operation on the activity interaction control, that the activity interaction control rotates counterclockwise.

Taking the rotation operation on the activity interaction control as an example, the above process describes the presentation of the activity interaction control performing the action corresponding to the rotation operation. In some embodiments, the interaction operation may be any one of a tap operation, an oscillation operation, a slide operation, a drag operation, and other type of interaction operation by a user. In some embodiments, the interaction operation on the activity interaction control may be associated with the presentation style (that is, the type) of the activity interaction control. Taking the activity interaction control displayed as the rudder as an example, the interaction operation on the activity interaction control is the rotation operation. Taking the activity interaction control displayed as the virtual red envelope style as an example, the interaction operation on the activity interaction control is the tap operation.

In S302 and S303, by presenting the activity interaction control, the user performs the interaction operation on the activity interaction control to trigger the process of presenting the action matching with the interaction operation by the activity interaction control. In some embodiments, prior to performing the interaction operation on the activity interaction control, the terminal further presents that the activity interaction control performs the interaction operation automatically Taking the action being the rotation operation as an example, the process of presenting the action by the activity interaction control is described.

In some embodiments, the terminal presents that the activity interaction control rotates in a target direction, and stops, in response to a rotating duration of the activity interaction control reaching a second duration or a preset duration, the rotation of the activity interaction control. In some embodiments, the terminal simultaneously performs the process of presenting the rotation of the activity interaction control in the target direction while playing the first media resource. In some embodiments, the terminal performs the process of presenting the rotation of the activity interaction control in the target direction upon stopping playing the first media resource.

The target direction is a predetermined fixed direction, such as, a leftward direction, a rightward direction, a clockwise direction, a counterclockwise direction, or the like. For example, the terminal presents that the activity interaction control rotates clockwise. In some embodiments, the terminal presents that the activity interaction control rotates counterclockwise. In some embodiments, the terminal presents that the activity interaction control rotates slightly in the leftward or rightward direction. The second duration is a predetermined fixed duration, such as 2s, and the second duration is any value greater than 0. For example, the terminal stops, in response to a rotating duration of the activity interaction control reaching 2s, the rotation of the activity interaction control.

By displaying the rotation of the activity interaction control when presenting the activity interaction control, a visual presentation of the rotation of the activity interaction control is achieved. Furthermore, the rotation of the activity interaction control is stopped after the activity interaction control is presented for a specific duration, such that the user can quickly find the interaction of the activity interaction control by seeing the change of the screen, and the efficiency of human-machine interaction is improved.

In some embodiments, prior to performing the interaction operation on the activity interaction control, the terminal further presents an operation prompt for the activity interaction control to instruct the user how to operate to trigger the activity interaction control. In some embodiments, the terminal simultaneously presents the operation prompt for the activity interaction control in playing the first media resource. In some embodiments, the terminal presents the operation prompt for the activity interaction control upon stopping playing the first media resource. In some embodiments, the terminal presents the operation prompt for the activity interaction control upon stopping the rotation of the activity interaction control, so as to instruct the user how to operate to trigger the activity interaction control. Thus, the user may prompt the presentation of the second media resource of the target activity by the trigger operation on the activity interaction control.

In some embodiments, the terminal presents an interaction trigger animation of the activity interaction control, wherein the interaction trigger animation indicates that the presentation of the second media resource of the target activity is triggerable in response to the interaction operation on the activity interaction control.

Illustratively, FIG. 5 is a schematic diagram of an initialization page according to an embodiment of the present disclosure. Referring to FIG. 5, in the case that the interaction operation is the rotation operation, the interaction trigger animation is a rotating trigger animation. In the "resource screen of the first media resource" shown in FIG. 5, the rotating trigger animation is the "gesture animation," which displays a rotating rudder in this example. In some embodiments, the terminal presents the rotating trigger animation with a target number of times. The target number of times is a predetermined fixed number of times, such as two times, and the target number of times is an integer greater than or equal to 1. For example, the terminal presents the rotating trigger animation twice, that is, presenting "the gesture rotates rudder animation" twice.

In some embodiments, the interaction trigger animation is provided in a form of an interaction control; and the method further includes: performing, in response to the interaction operation on the interaction trigger animation, the process of presenting the action presented by the activity interaction control and matched with the interaction operation. For example, the terminal presents, in response to the rotation operation on an area of the interaction trigger animation on the screen (that is, the area of the interaction control) by a user, that the activity interaction control rotates with the rotation operation. By the interaction operation on the interaction trigger animation, the presentation of the activity interaction control performing the action corresponding to the interaction operation is triggered, such that the interaction in the initialization page is improved.

In some embodiments, the terminal presents an interaction trigger prompt of the activity interaction control, wherein the interaction trigger prompt indicates that the presentation of the second media resource of the target activity is triggerable based on the interaction operation on the activity interaction control.

Illustratively, referring to FIG. 5, in the case that the interaction operation is the rotation operation, the interaction trigger prompt is a rotating trigger prompt. In the resource screen of the first media resource shown in FIG. 5, the rotating trigger prompt is "rotating rudder to acquire welfare."

In some embodiments, the terminal presents the interaction trigger prompt of the activity interaction control when presenting the interaction trigger animation of the activity interaction control. By presenting the interaction trigger animation and the interaction trigger prompt simultaneously, the prompt of the trigger of the activity interaction control can be enhanced, and the efficiency of acquiring information of the resource content is further improved.

Furthermore, by presenting the interaction trigger animation and the interaction trigger prompt, the presented amount of the information is increased, so as to prompt the user the trigger manner of the activity interaction control.

In S304, the terminal presents the second media resource of the target activity, wherein the second media resource is associated with the first media resource.

In some embodiments, the terminal presents, in the case that the rotation of the activity interaction control satisfies a target condition, the second media resource of the target activity.

The target condition is a predetermined resource presentation condition, and is configured to determine whether the opportunity of presenting the second media resource is reached. In some embodiments, the target condition is that the rotation of the activity interaction control is stopped. Correspondingly, the terminal presents the second media resource of the target activity in the case that the rotation of the activity interaction control is stopped. In some embodiments, the target condition is that the rotating duration of the activity interaction control reaches a third duration. The third duration is a predetermined fixed duration, such as 2s, and the third duration is any value greater than 0. Correspondingly, the terminal presents the second media resource of the target activity in response to a rotating duration of the activity interaction control reaching the third duration. In some embodiments, the target condition is that a rotating speed of the activity interaction control is decreased to a target speed. The target speed is a predetermined fixed speed, such as 0.5 cycles per second, and the target speed is any value greater than or equal to 0. Correspondingly, the terminal presents the second media resource of the target activity in the case that the rotating speed of the activity interaction control is decreased to the target speed.

In some embodiments, the target condition may be set as any type of condition. For example, the target condition is that the activity interaction control rotates an angle greater than a target angle. The target angle is any angle greater than 0. For example, the target angle is 60 degrees. And the terminal presents the second media resource of the target activity in the case that the rotating angle of the activity interaction control is greater than the target angle. For example, the terminal presents the second media resource of the target activity when rotating the activity interaction control, which is not limited in the embodiments of the present disclosure.

In some embodiments, the terminal acquires and presents the second media resource of the target activity in the case that the rotation of the activity interaction control satisfies the target condition. In some embodiments, taking the terminal storing the second media resource locally as an example, the terminal acquires the second media resource of the target activity from the local storage space in the case that the rotation of the activity interaction control satisfies the target condition, and then presents the second media resource. For example, upon acquiring the second media resource, the terminal stores the second media resource to the local storage space, so as to directly acquire the second media resource from the local storage space. In some embodiments, the terminal acquires the second media resource from a library of resource data associated with the server. The library of resource data is configured to store a plurality of activity identifications and the second media resource associated with each activity identification. That is, the activity identification of each activity is stored in association with the second media resource. The corresponding process of acquiring the resource includes: sending, by the terminal, in the case that the rotation of the activity interaction control satisfies the target condition, a resource acquiring request to the server; upon receiving the resource acquiring request, determining, by the server, the second media resource stored in association with the activity identification by querying in the library of resource data, and sending the acquired second media resource to the terminal; and presenting, by the terminal the second media resource upon receiving the second media resource. The different manners of acquiring the second media resource are provided to present the second media resource subsequently.

In some embodiments, the second media resource is configured to introduce at least one virtual resource associated with the target activity. The virtual resource includes a virtual coupon, a virtual red envelope, a virtual deduction coupon, a virtual voucher, a virtual point, and other award resources. In some embodiments, the second media resource may be in a video type, a picture type, an animation type, or other types.

In some embodiments, the terminal presents the at least one virtual resource in an upper layer of the resource screen of the second media resource. For example, the terminal presents the at least one virtual resource in a pop-up form in the upper layer of the resource screen of the second media resource. In some embodiments, the terminal renders the upper layer of the resource screen of the second media resource to present the at least one virtual resource. In some embodiments, the terminal presents the at least one virtual resource in the resource screen of the second media resource. For example, the second media resource includes the video of the at least one virtual resource. In some embodiments, by adding the resource screen of the virtual resource, the at least one virtual resource can be presented. The different manners of presenting the virtual resource are provided to improve the flexibility of presenting the virtual resource.

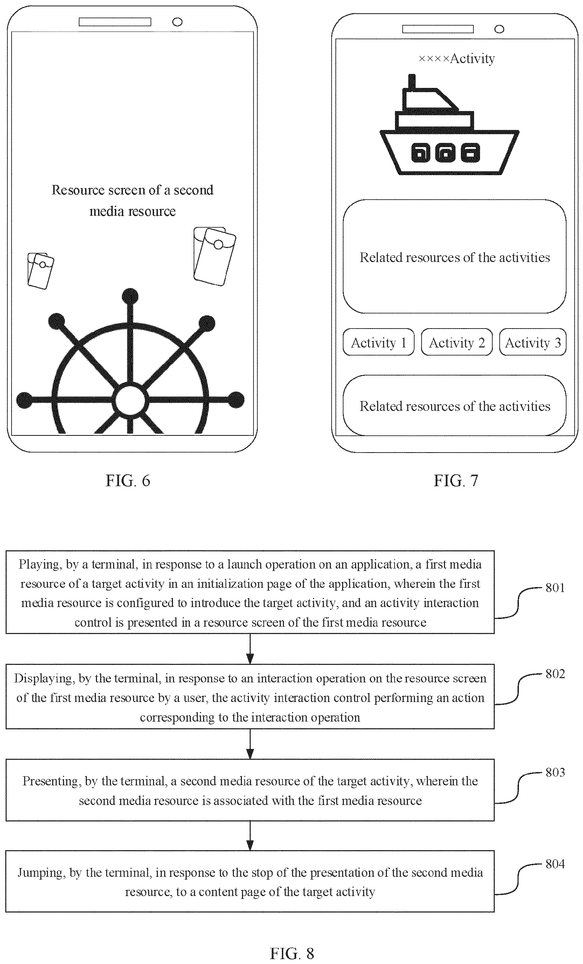

Illustratively, FIG. 6 is a schematic diagram of an initialization page according to an embodiment of the present disclosure. Referring to FIG. 6, at least one virtual resource is presented in the "resource screen of the second media resource." The at least one virtual resource is the "virtual red envelope" shown in FIG. 6.

The second media resource of the target activity is triggered to be presented by the rotation operation on the activity interaction control, such that a novel and creative interaction in the initialization page is provided, and the advertisement efficiency of the target activity is improved.

In S305, the terminal jumps, in response to the stop of the presentation of the second media resource, to a content page of the target activity.

That is, the terminal jumps, in the case that the second media resource stops being presented to the content page of the target activity.

The content page is configured to introduce the content of the target activity. For example, the content page is a specific page of the target activity. Illustratively, FIG. 7 is a schematic diagram of a content page according to an embodiment of the present disclosure. Referring to FIG. 7, the resource, such as the video resource, the picture resource, or the text resource, associated with the target activity is presented in the content page shown in FIG. 7. Taking the target activity being associated with the ship as an example, elements of the ship are presented in the content page shown in FIG. 7.

S305 is illustrated by taking automatically jumping, in response to the stop of the presentation of the second media resource, to the content page of the target activity as an example. In some embodiments, in the case that at least one virtual resource is presented, the method further includes: jumping, by the terminal, in response to the trigger operation on any virtual resource, to the content page of the target activity. Thus, in the case that the virtual resource is triggerable, the terminal may jump, in response to the trigger operation on any virtual resource, to the content page of the target activity, such that the flexibility of jumping to the content page is improved, and the manner of jumping to the content page is diversified.

It is noted that S305 is an optional operation. In some embodiments, in the case that the second media resource is received, the terminal is not necessary to perform the operation of jumping to the content page. It is further noted that S304 and S305 are illustrated by taking first presenting the second media resource and then jumping, in response to the stop of the presentation of the second media resource, to the content page of the target activity as an example. In some embodiments, upon S303, the terminal jumps to the content page of the target activity and presents the second media resource of the target activity, such that the content page of the target activity is presented in association with the second media resource of the target activity, and the presented amount of the information in the content page is increased. Thus, the user can view the second media resource in viewing the content of the target activity, thereby improving the efficiency of acquiring information.

In the technical solutions of the embodiments of the present disclosure, the first media resource of the target activity is presented in the initialization page of the application, and the activity interaction control is further presented in the resource screen of the first media resource in the case that the first media resource is presented, so as to increase an amount of information presented in the initialization page. Furthermore, the presentation of the activity interaction control performing the action corresponding to the interaction operation is triggered by the interaction operation on the activity interaction control, and the second media resource of the target activity is further presented. Thus, interaction of the media resources in the initialization page is achieved, such that the form of interaction in the initialization page is diversified, and the presentation effect of the media resources and the efficiency of human-machine interaction are improved.

FIG. 3 illustrates the method for presenting resources by taking the presentation of the activity interaction control in the upper layer of the resource screen of the first media resource as an example. The technical solutions of the embodiments of the present disclosure are further illustrated based on some other embodiments hereinafter. FIG. 8 is a flowchart of a method for presenting resources according to an embodiment of the present disclosure. The method is applicable to a computer device. As shown in FIG. 8, taking the computer device being a terminal as an example, the method may include the following steps.

In S801, the terminal plays, in response to the launch operation on the application, the first media resource of the target activity in the initialization page of the application, wherein the first media resource is configured to introduce the target activity, and the resource screen of the first media resource includes the activity interaction control.

It is noted that for the process of playing the first media resource when the application is launched in S801, reference may be made to S301, which is not repeated herein.

In the embodiment shown in FIG. 8, the resource screen of the first media resource includes the activity interaction control. By configuring the first media resource including the activity interaction control, the resource screen including the activity interaction control can be simultaneously played when the first media resource is played, and the visual effect that the activity interaction control is triggerable can be achieved, which attracts attention of the user. In this way, the user can quickly find the interaction of the activity interaction control, and the efficiency of human-machine interaction is improved.

In some embodiments, all frames of the resource screen of the first media resource include the activity interaction control, such that the resource screen including the activity interaction control is simultaneously played when the first media resource is played, thereby increasing the amount of information included in the resource screen.

In some embodiments, a target frame of the resource screen of the first media resource includes the activity interaction control. The target frame of the resource screen is a predetermined part of frames of the resource screen. For example, the target frame of the resource screen is configured as the frames of the resource screen after the play duration of the first media resource reaches the first duration. Thus, the resource screen including the activity interaction control is presented when the first media resource is played after a specific duration, such that the user may focus on the resource content of the first media resource within an initialization play duration of the first media resource, so as to prevent the activity interaction control from blocking the resource screen of the first media resource.

In some embodiments, the first media resource further includes other resource screen associated with the activity interaction control, so as to provide more rich content in the first media resource.

In some embodiments, the first media resource includes the resource screen of the rotation of the activity interaction control in a target direction. In some embodiments, in response to a rotating duration of the activity interaction control reaching the second duration, the resource screen of the first media resource stops presenting the resource screen of the rotation of the activity interaction control. In this way, by the rotation of the activity interaction control, the presented amount of the information is increased, and a visual experience that the activity interaction control is rotatable can be achieved. Furthermore, the rotation of the activity interaction control is stopped in the case that the activity interaction control is rotated for a duration, so as to prevent the rotation of the activity interaction control from blocking the resource content.

In some embodiments, the resource screen of the first media resource includes the interaction trigger animation of the activity interaction control. In some embodiments, the resource screen of the first media resource includes the interaction trigger prompt of the activity interaction control. By configuring the resource screen including the interaction trigger animation or the interaction trigger prompt, the amount of information included in the first media resource is increased, so as to prompt the user the trigger manner based on the activity interaction control.

In S802, the terminal displays, in response to the interaction operation on the resource screen of the first media resource by the user, the activity interaction control performing the action corresponding to the interaction operation.

In some embodiments, in the case that the interaction operation is the rotation operation, the terminal presents, in response to the rotation operation on the resource screen of the first media resource, a target media resource. The target media resource includes the resource screen displaying the activity interaction control rotating with the rotation operation.

In some embodiments, taking the rotation operation being a clockwise rotation operation as an example, the terminal presents, in response to the clockwise rotation operation on the resource screen of the first media resource by a user, a first target media resource. The first target media resource includes the resource screen that displays the activity interaction control rotating clockwise with the rotation operation. In some embodiments, taking the rotation operation being a counterclockwise rotation operation as an example, the terminal presents, in response to the counterclockwise rotation operation on the resource screen of the first media resource by a user, a second target media resource. The second target media resource includes the resource screen that displays the activity interaction control rotating counterclockwise with the rotation operation. By presenting the predetermined target media resource, the effect that the activity interaction control performs the action corresponding to the interaction operation is achieved.

In some embodiments, the terminal displays, in response to the interaction operation on any area in the resource screen by a user, the activity interaction control performing the action corresponding to the interaction operation. For example, the terminal displays, in response to the interaction operation on a target area in the resource screen, the action presented by the activity interaction control and matched with the interaction operation, that is, the terminal displays, in response to the interaction operation on a target area in the resource screen by a user, the activity interaction control performing an action corresponding to the interaction operation. The target area is a predetermined fixed area, such as an area in a lower portion of the resource screen. In some embodiments, the target area is a presentation area of the activity interaction control in the resource screen. For example, in the case that the activity interaction control is located in the lower portion of the resource screen, the target area is an area in the lower portion of the resource screen; in the case that the activity interaction control is located at the central portion of the resource screen, the target area is a central portion of the resource screen.

By configuring the first media resource including the activity interaction control, the resource screen including the activity interaction control may be simultaneously played when the first media resource is played, and the visual effect that the activity interaction control is triggerable can be achieved, such that the user's attention can be paid on the activity interaction control and the success rate of the user initiating the interaction operation on the activity interaction control can be improved. Furthermore, the action corresponding to the activity interaction control is displayed, such that a novel and creative interaction in the initialization page is provided, and the advertisement efficiency of the target activity is improved.

In S803, the terminal presents the second media resource of the target activity, wherein the second media resource is associated with the first media resource.

It is noted that for the process of presenting the second media resource of the target activity in S803, reference may be made to S304, which is not repeated herein.

In S802 and S803, the activity interaction control performing the action corresponding to the interaction operation is first displayed, and then the second media resource of the target activity is presented. In some embodiments, S802 and S803 may be performed simultaneously. That is, the terminal presents the second media resource of the target activity, and the second media resource further includes the resource screen of the rotation of the activity interaction control with the rotation operation, such that the resource screen of the rotation of the activity interaction control with the rotation operation is presented when the resource content of the second media resource is presented. By presenting the second media resource, the rotation of the activity interaction control with the rotation operation is presented, and the amount of information included in the second media resource is increased.

In S804, the terminal jumps, in response to the stop of the presentation of the second media resource, to the content page of the target activity.

It is noted that for the process of jumping to the content page in S804, reference may be made to S305, which is not repeated herein.

In the technical solutions of the embodiments of the present disclosure, the first media resource of the target activity is presented in the initialization page of the application, and the activity interaction control is further presented in the resource screen of the first media resource in the case that the first media resource is presented, so as to increase an amount of information presented in the initialization page. Furthermore, the presentation of the activity interaction control performing the action corresponding to the interaction operation is triggered by the interaction operation on the activity interaction control, and the second media resource of the target activity is further presented. Thus, interaction of the media resources in the initialization page is achieved, such that the form of interaction in the initialization page is diversified, and the presentation effect of the media resources and the efficiency of human-machine interaction are improved.

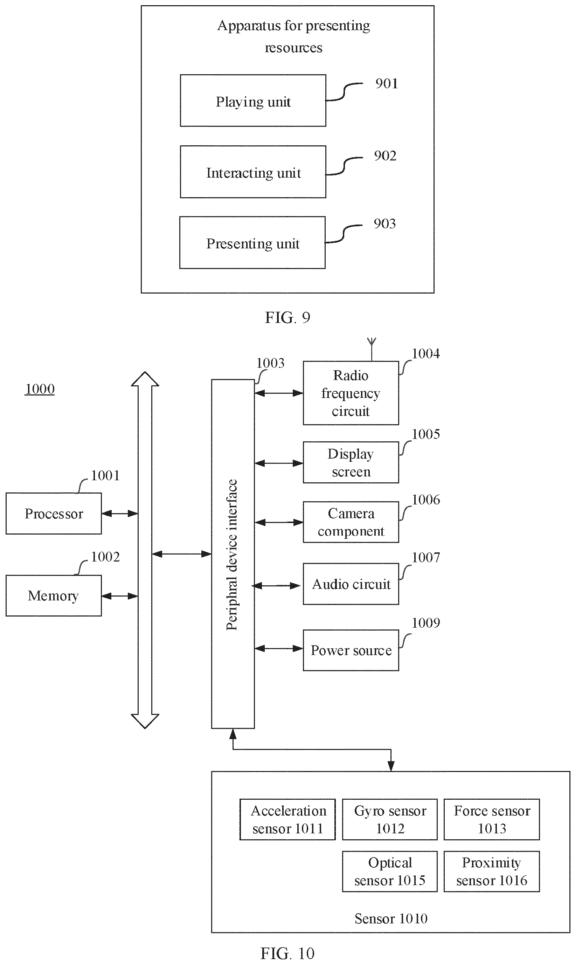

FIG. 9 is a block diagram of an apparatus for presenting resources according to an embodiment of the present disclosure. Referring to FIG. 9, the apparatus includes a playing unit 901, an interacting unit 902, and a presenting unit 903.

The playing unit 901 is configured to play, in response to a launch operation on an application, a first media resource of a target activity in an initialization page of the application, wherein an activity interaction control is presented in a resource screen of the first media resource, and the first media resource is configured to introduce the target activity.

The interacting unit 902 is configured to display, in response to an interaction operation on the activity interaction control by a user, the activity interaction control performing the action corresponding to the interaction operation.

The presenting unit 903 is configured to present a second media resource of the target activity, wherein the second media resource is associated with the first media resource.

In some embodiments, the playing unit 901 is configured to present the activity interaction control in an upper layer of the resource screen of the first media resource played in the initialization page; and the interacting unit 902 is configured to display, in response to the interaction operation by a user on the activity interaction control presented in the upper layer of the resource screen of the first media resource, the activity interaction control performing the action corresponding to the interaction operation.

In some embodiments, the playing unit 901 is configured to present, in response to start of playback of the first media resource, the activity interaction control in the upper layer of the resource screen of the first media resource; or present, in response to the playback duration of the first media resource reaching a first duration, the activity interaction control in the upper layer of the resource screen of the first media resource.

In some embodiments, the resource screen of the first media resource includes the activity interaction control; and the interacting unit 902 is configured to display, in response to the interaction operation on the resource screen of the first media resource by the user, the activity interaction control performing the action corresponding to the interaction operation.

In some embodiments, the apparatus further includes an animation presenting unit, configured to present an interaction trigger animation of the activity interaction control, wherein the interaction trigger animation indicates that the presentation of the second media resource of the target activity is triggerable in response to the interaction operation on the activity interaction control; or a prompt presenting unit, configured to present an interaction trigger prompt of the activity interaction control, wherein the interaction trigger prompt indicates that the presentation of the second media resource of the target activity is triggerable based on the interaction operation on the activity interaction control.

In some embodiments, in presenting the interaction trigger animation, the interaction trigger animation is provided in a form of an interaction control; and the interacting unit 902 is further configured to perform, in response to the interaction operation on the interaction trigger animation, the process of presenting the activity interaction control performing the action corresponding to the interaction operation.

In some embodiments, the interaction operation is a rotation operation; and the interacting unit 902 is configured to present, in response to the rotation operation on the activity interaction control, that the activity interaction control rotates with the rotation operation.

In some embodiments, the apparatus further includes: a rotating unit, configured to present that the activity interaction control rotates in a target direction; and stop, in response to a rotating duration of the activity interaction control reaching a second duration, the rotation of the activity interaction control.

In some embodiments, the second media resource is configured to introduce at least one virtual resource associated with the target activity; and the presenting unit 903 includes: a first presenting unit, configured to present the at least one virtual resource in an upper layer of the resource screen of the second media resource; or a second presenting unit, configured to present the at least one virtual resource in the resource screen of the second media resource.

In some embodiments, the apparatus further includes: a jumping unit, configured to jump, in response to a trigger operation on any virtual resource, to a content page of the target activity.

In some embodiments, a presentation style of the activity interaction control is associated with content of the target activity.

The computer device in the embodiments of the present disclosure may be provided as a terminal. FIG. 10 is a structural block diagram of a terminal 1000 according to an embodiment. The terminal 1000 is a smart phone, a tablet computer, a Moving Picture Experts Group Audio Layer III (MP3) player, a Moving Picture Experts Group Audio Layer IV (MP4) player, a laptop, or desk computer. The terminal 1000 is may also be a user equipment, a portable terminal, a laptop terminal, a desk terminal, or the like.

Generally, the terminal 1000 includes a processor 1001 and a memory 1002.

The processor 1001 may include one or more processing cores, such as a 4-core processor, and an 8-core processor. The processor 1001 is implemented by at least one hardware of a digital signal processor (DSP), a field-programmable gate array (FPGA), or a programmable logic array (PLA). The processor 1001 may further include a primary processor and a coprocessor. The main processor is a processor configured to process the data in an awake state, and is also referred to as a central processing unit (CPU). The coprocessor is a low-power-consumption processor configured to process the data in a standby state. In some embodiments, the processor 1001 is integrated with a graphics processing unit (GPU), which is configured to render and draw the content that needs to be presented by a display screen. In some embodiments, the processor 1001 further includes an Artificial Intelligence (AI) processor configured to process computational operations related to machine learning.

The memory 1002 may include one or more computer-readable storage mediums. The computer-readable storage medium 1002 is non-transitory. The memory 1002 may further include a high-speed random-access memory, and a non-volatile memory, such as one or more disk storage devices and flash storage devices. In some embodiments, a non-transitory computer-readable storage medium in the memory 1002 is configured to store one or more program codes; wherein the one or more program codes, when loaded and executed by the processor 1001, cause the processor 1001 to perform the process performed by the terminal in the method for presenting resources according to the embodiments of the present disclosure.

In some embodiments, the terminal 1000 may further include a peripheral device interface 1003 and at least one peripheral device. The processor 1001, the memory 1002, and the peripheral device interface 1003 may be connected by a bus or a signal line. Each peripheral device may be connected to the peripheral device interface 1003 by a bus, a signal line, or a circuit board. Specifically, the peripheral device includes at least one of a radio frequency circuit 1004, a display screen 1005, a camera assembly 1006, an audio circuit 1007, and a power source 1009.

The peripheral device interface 1003 may be configured to connect at least one peripheral device associated with an input/output (I/O) to the processor 1001 and the memory 1002. In some embodiments, the processor 1001, the memory 1002, and the peripheral device interface 1003 are integrated on the same chip or circuit board. In some embodiments, any one or two of the processor 1001, the memory 1002, and the peripheral device interface 1003 may be implemented on a separate chip or circuit board, which is not limited in the embodiments of the present disclosure.

The radio frequency circuit 1004 is configured to receive and transmit a radio frequency (RF) signal, which is also referred to as an electromagnetic signal. The radio frequency circuit 1004 communicates with a communication network and other communication devices via the electromagnetic signal. The radio frequency circuit 1004 converts an electrical signal into the electromagnetic signal to transmit, or converts the received electromagnetic signal into the electrical signal. In some embodiments, the RF circuit 1004 includes an antenna system, an RF transceiver, one or more amplifiers, a tuner, an oscillator, a digital signal processor, a codec chipset, a subscriber identity module card, and the like. The RF circuit 1004 may be communicated with other terminals via at least one wireless communication protocol. The wireless communication protocol includes, but is not limited to, a metropolitan area network (MAN), various generations of mobile communication networks (2G, 3G, 4G, and 5G), a wireless local area network (LAN) and/or a wireless fidelity (Wi-Fi) network. In some embodiments, the RF circuit 1004 may further include near-field communication (NFC) related circuits, which is not limited in the present disclosure.

The display screen 1005 is configured to present a user interface (UI). The UI includes graphics, text, icons, videos, and any combination thereof. In the case that the display screen 1005 is a touch display screen, the display screen 1005 further possesses a capacity of acquiring touch signals on or over the surface of the display screen 1005. The touch signal may be input into the processor 1001 as a control signal for processing. In this case, the display screen 1005 may be further configured to provide virtual buttons and/or virtual keyboards, which are also referred to as soft buttons and/or soft keyboards. In some embodiments, the display screen 1005 may be one, and is disposed on the front panel of the terminal 1000. In some other embodiments, the display screen 1005 may be at least two, and are disposed on different surfaces of the terminal 1000 or in a folded design. In some embodiments, the display screen 1005 may be a flexible display screen disposed on the curved or folded surface of the terminal 1000. Even the display screen 1005 may be disposed as an irregular shape other than a rectangle. That is, the display screen 1005 may be an irregular-shaped screen. In some embodiments, the display screen 1005 may be prepared from a material such as a liquid crystal display (LCD), an organic light-emitting diode (OLED), or the like.

The camera assembly 1006 is configured to capture images or videos. In some embodiments, the camera component 1006 may include a front camera and a rear camera. Generally, the front camera is disposed on the front panel of the terminal, and the rear camera is disposed on the back of the terminal. In some embodiments, the rear camera may be at least two, and may be any one of a primary camera, a depth-of-field camera, a wide-angle camera, and a telephoto camera, so as to implement a background blurring function achieved by fusion of the main camera and the depth-of-field camera, panoramic shooting and virtual reality (VR) shooting functions or other fusion shooting functions achieved by fusion of the main camera and the wide-angle camera. In some embodiments, the camera component 1006 may further include a flashlight. The flashlight may be a mono-color temperature flashlight or a two-color temperature flashlight. The two-color temperature flash is a combination of a warm flashlight and a cold flashlight, and can be used for light compensation at different color temperatures.

The audio circuit 1007 may include a microphone and a speaker. The microphone may be configured to acquire sound waves of users and environments, and convert the sound waves into electrical signals for inputting into the processor 1001 for processing, or inputting into the RF circuit 1004 for voice communication. For the purpose of stereo acquisition or noise reduction, there are a plurality of microphones, which are disposed at different locations of the terminal 1000. The microphone may be further an array microphone or an omnidirectional acquisition microphone. The speaker may be configured to convert the electrical signals from the processor 1001 or the RF circuit 1004 into the sound waves. The speaker may be a conventional thin film speaker or a piezoelectric ceramic speaker. In the case that the speaker is the piezoelectric ceramic speaker, the electrical signal can be converted into not only human-audible sound waves but also the sound waves which are inaudible to humans for ranging and the like. In some embodiments, the audio circuit 1007 may further include a headphone jack.

The power source 1009 may be configured to power up various components in the terminal 1000. The power source 1009 may be alternating current, direct current, a disposable battery, or a rechargeable battery. In the case that the power source 1009 includes the rechargeable battery, the rechargeable battery may support wired charging or wireless charging. The rechargeable battery may further support the fast charging technology.

In some embodiments, the terminal 1000 further includes one or more sensors 1010. The one or more sensors 1010 include, but are not limited to, an acceleration sensor 1011, a gyro sensor 1012, a force sensor 1013, an optical sensor 1015, and a proximity sensor 1016.

The acceleration sensor 1011 may be configured to detect magnitudes of accelerations on three coordinate axes of a coordinate system established by the terminal 1000. For example, the acceleration sensor 1011 may be configured to detect components of a gravitational acceleration on the three coordinate axes. The processor 1001 may control the touch display screen 1005 to display a user interface in a landscape view or a portrait view based on a gravity acceleration signal acquired by the acceleration sensor 1011. The acceleration sensor 1011 may be further configured to acquire motion data of a game or a user.

The gyro sensor 1012 may be configured to detect a body direction and a rotation angle of the terminal 1000. The gyro sensor 1012 may be cooperated with the acceleration sensor 1011 to capture a 3D motion of the user on the terminal 1000. Based on the data captured by the gyro sensor 1012, the processor 1001 may implement the following functions: motion sensing (such as changing the UI in response to a tilt operation of the user), image stability in shooting, game control, and inertial navigation.

The force sensor 1013 may be disposed on a side frame of the terminal 1000 and/or a substratum of the touch display screen 1005. In the case that the force sensor 1013 is disposed on the side frame of the terminal 1000, a holding signal of the user on the terminal 1000 may be detected. The processor 1001 may perform a left-right hand recognition or a quick operation based on the holding signal acquired by the force sensor 1013. In the case that the force sensor 1013 is disposed on the substratum of the touch display screen 1005, the processor 1001 controls an operable control on the UI based on a press operation of the user on the touch display screen 1005. The operable control includes at least one of a button control, a scroll bar control, an icon control, and a menu control.

The optical sensor 1015 is configured to acquire ambient light intensity. In some embodiments, the processor 1001 may control the display luminance of the touch display screen 1005 based on the intensity of the ambient light acquired by the optical sensor 1015. Specifically, in the case that the intensity of the ambient light is high, the display luminance of the touch display screen 1005 is increased; and in the case that the intensity of the ambient light is low, the display luminance of the touch display screen 1005 is decreased. In some embodiments, the processor 1001 may further dynamically adjust shooting parameters of the camera component 1006 based on the intensity of the ambient light acquired by the optical sensor 1015.

The proximity sensor 1016, also referred to as a distance sensor, is generally disposed on the front panel of the terminal 1000. The proximity sensor 1016 is configured to capture a distance between the user and a front surface of the terminal 1000. In some embodiments, in the case that the proximity sensor 1016 detects that the distance between the user and the front surface of the terminal 1000 gradually decreases, the processor 1001 controls the touch display screen 1005 to switch from a screen-on state to a screen-off state. In the case that the proximity sensor 1016 detects that the distance between the user and the front surface of the terminal 1000 gradually increases, the processor 1001 controls the touch display screen 1005 to switch from the screen-off state to the screen-on state.

It should be understood that the configuration shown in FIG. 10 does not constitute a limitation to the terminal 1000, and may include more or fewer components compared with the components shown in FIG. 10, or combinations of some components, or an arrangement of different components.

An embodiment of the present disclosure further provides a non-transitory computer-readable storage medium storing one or more program codes therein, such as a memory storing one or more program codes therein. The one or more program codes, when loaded and executed by a processor of a server, cause the server to perform the method for presenting resources according to the above embodiments. In some embodiments, the computer-readable storage medium may be a read-only memory (ROM), a random-access memory (RAM), a compact disc read-only memory (CD-ROM), a magnetic tape, a floppy disk, an optical data storage device, or the like.

An embodiment of the present disclosure further provides a computer program product storing one or more computer programs therein. The one or more program codes, when loaded and run by a processor of a computer device, cause the computer device to perform the method for presenting resources according to the above embodiments.

In some embodiments, the one or more computer programs according to the embodiments of the present disclosure may be loaded and run on one computer device, or loaded and run on a plurality of computer devices at one site, or loaded and run on a plurality of computer devices distributed at a plurality of locations and interconnected by a communication network. The plurality of computer devices distributed at a plurality of locations and interconnected by the communication network may form a blockchain system.

## Claims

1. A method for presenting resources, applicable to a terminal, comprising:
playing (201, 301, 801), in response to a launch operation on an application, a first media resource of a target activity in an initialization page of the application, wherein an activity interaction control is presented in a resource screen of the first media resource, and the first media resource is configured to introduce the target activity;
displaying (202), in response to an interaction operation on the activity interaction control by a user, the activity interaction control performing an action corresponding to the interaction operation; and
presenting (203, 304, 803) a second media resource of the target activity, wherein the second media resource is associated with the first media resource.

2. The method according to claim 1, wherein
said playing (201, 301, 801) the first media resource of the target activity in the initialization page of the application comprises:
presenting (302) the activity interaction control in an upper layer of the resource screen of the first media resource played in the initialization page; and
said displaying (202), in response to the interaction operation on the activity interaction control, the activity interaction control performing the action corresponding to the interaction operation by the user comprises:
displaying (303), in response to the interaction operation on the activity interaction control presented in the upper layer of the resource screen of the first media resource by the user, the activity interaction control performing the action corresponding to the interaction operation.

3. The method according to claim 2, wherein said presenting (302) the activity interaction control in the upper layer of the resource screen of the first media resource played in the initialization page comprises at least one of:
presenting, in response to start of play of the first media resource, the activity interaction control in the upper layer of the resource screen of the first media resource; or
presenting, in response to a play duration of the first media resource reaching a first duration, the activity interaction control in the upper layer of the resource screen of the first media resource.

4. The method according to claim 1, wherein the resource screen of the first media resource comprises the activity interaction control; and
said displaying (202), in response to the interaction operation on the activity interaction control by the user, the activity interaction control performing the action corresponding to the interaction operation comprises:
displaying (802), in response to the interaction operation on the resource screen of the first media resource by the user, the activity interaction control performing the action corresponding to the interaction operation.

5. The method according to any one of claims 1 to 4, further comprising:
presenting an interaction trigger animation of the activity interaction control, wherein the interaction trigger animation indicates that presentation of the second media resource of the target activity is triggerable in response to the interaction operation on the activity interaction control by the user; or
presenting an interaction trigger prompt of the activity interaction control, wherein the interaction trigger prompt indicates that presentation of the second media resource of the target activity is triggerable in response to the interaction operation on the activity interaction control by the user.

6. The method according to claim 5, wherein
the interaction trigger animation is provided in a form of an interaction control in the case of presenting the interaction trigger animation; and
the method further comprises:
displaying, in response to the interaction operation on the interaction trigger animation by the user, the activity interaction control performing the action corresponding to the interaction operation.

7. The method according to any one of claims 1 to 6, wherein
the interaction operation is a rotation operation; and
said displaying (202), in response to the interaction operation on the activity interaction control by the user, the activity interaction control performing the action corresponding to the interaction operation comprises:
displaying, in response to the rotation operation on the activity interaction control by the user, the activity interaction control rotating with the rotation operation.

8. The method according to claim 7, further comprising:
displaying the activity interaction control rotating in a target direction; and
stopping, in response to a rotating duration of the activity interaction control reaching a second duration, the rotation of the activity interaction control.

9. The method according to any one of claims 1 to 8, wherein
the second media resource is configured to introduce at least one virtual resource associated with the target activity; and
said presenting (203, 304, 803) the second media resource of the target activity comprises at least one of:
presenting the at least one virtual resource in an upper layer of the resource screen of the second media resource; or
presenting the at least one virtual resource in the resource screen of the second media resource.

10. The method according to claim 9, further comprising:
jumping, in response to a trigger operation on a virtual resource, to a content page of the target activity.

11. The method according to any one of claims 1 to 10, wherein a presentation style of the activity interaction control is associated with content of the target activity.

12. An apparatus for presenting resources, comprising:
a playing unit (901), configured to play, in response to a launch operation on an application, a first media resource of a target activity in an initialization page of the application, wherein an activity interaction control is presented in a resource screen of the first media resource, and the first media resource is configured to introduce the target activity;
an interacting unit (902), configured to display, in response to an interaction operation on the activity interaction control, the activity interaction control performing an action corresponding to the interaction operation; and
a presenting unit (903), configured to present a second media resource of the target activity, wherein the second media resource is associated with the first media resource.

13. The apparatus according to claim 12, wherein
the playing unit (901) is configured to present the activity interaction control in an upper layer of the resource screen of the first media resource played in the initialization page; and
the interacting unit (902) is configured to display, in response to the interaction operation on the activity interaction control presented in the upper layer of the resource screen of the first media resource by the user, the activity interaction control performing the action corresponding to the interaction operation.

14. The apparatus according to claim 13, wherein the playing unit (901) is configured to:
present, in response to start of play of the first media resource, the activity interaction control in the upper layer of the resource screen of the first media resource; or
present, in response to a play duration of the first media resource reaching a first duration, the activity interaction control in the upper layer of the resource screen of the first media resource.

15. A non-transitory computer-readable storage medium, storing one or more program codes therein, wherein the one or more program codes, when loaded and executed by a processor (1001) of a computer device (1000), cause the computer device (1000) to perform the method as defined in any one of claims 1 to 11.
